# EUROPÄISCHE PATENTANMELDUNG

(11) **EP 1 110 751 A2**
(43) Veröffentlichungstag der Anmeldung: **27.06.2001**
(21) Anmeldenummer: 01105996.1
(22) Anmeldetag: 17.04.1997
(51) Int. Cl.: B42D 15/10, G07B 1/00, G07B 15/00

(54) **Adhäsiv-Vignette zur Erhebung von Strassenbenutzungsgebühren und Vorrichtung zur Ausgabe von Adhäsiv-Vignetten**

(30) Priorität: 20.04.1996 DE 19615834; 23.12.1996 DE 19654847
(62) Teilanmeldung aus: 97106343.3
(71) Anmelder: GSI Gesellschaft für Systemtechnik und Informatik mbH, 88682 Salem (DE)
(72) Erfinder: Dünhaupt, Rolf, 88682 Salem (DE)
(74) Vertreter: Patentanwälte Eisele, Otten, Roth & Dobler

(57) **Zusammenfassung**

Es wird eine Adhäsiv-Vignette vorgeschlagen, die eine flexible Erhebung von Straßenbenutzungsgebühren ermöglicht. Dies wird erfindungsgemäß dadurch erreicht, dass eine Vignetten-Vorlage vorgesehen ist, auf der zum Zeitpunkt der Ausgabe an den Käufer bestimmte Gültigkeitsmerkmale anzubringen sind.

## Beschreibung

Die Erfindung betrifft eine Adhäsiv-Vignette zur Erhebung von Straßenbenutzungsgebühren gemäß dem Oberbegriff des Anspruchs 1 sowie eine Vorrichtung zur Ausgabe solcher Vignetten gemäß dem Oberbegriff von Anspruch 5.

Adhäsiv-Vignetten zur Erhebung von Straßenbenutzungsgebühren sind beispielsweise für die Autobahnbenut zungsgebühren in der Schweiz bekannt. In Österreich finden ab 1997 ebenfalls derartige Adhäsiv-Vignetten Verwendung. Die aus der Schweiz bekannte Adhäsiv-Vignette besitzt einen Gültigkeitszeitraum von einem Jahr und wird jedes Jahr neu herausgegeben.

Aufgabe der Erfindung ist es, eine Adhäsiv-Vignette sowie eine Vorrichtung zur Ausgabe solcher Vignetten vorzuschlagen, mittels der eine flexiblere Erhebung von Straßenbenutzungsgebühren möglich ist.

Diese Aufgabe wird ausgehend von einer Adhäsiv-Vignette der einleitend genannten Art durch die kennzeichnenden Merkmale des Anspruchs 1 und des Anspruchs 5 gelöst.

Durch die in den Unteransprüchen genannten Maßnahmen sind vorteilhafte Ausführungen und Weiterbildungen der Erfindung möglich.

Dementsprechend zeichnet sich eine erfindungsgemäße Adhäsiv-Vignette dadurch aus, daß eine Vignettenvorlage vorgesehen ist, auf der zum Zeitpunkt der Ausgabe an den Käufer bestimmte Gültigkeitsmerkmale anzubringen sind.

Die Vignettenvorlage ist vor dem Anbringen der Gültigkeitsmerkmale wertlos, wodurch eine hohe Sicherheit gegen Mißbrauch erzielt wird. Durch das Anbringen von Gültigkeitsmerkmalen ist zudem eine flexible Gebührenerhebung möglich. Die Gebührenerhebung kann beispielsweise streckenabhängig, fahrzeugabhängig und/oder zeitabhängig erfolgen.

Für eine flexible Ausgabe solcher Adhäsiv-Vignetten bspw. bezüglich des zeitlichen Gültigkeitsbereichs müssen die Vignetten entsprechend gekennzeichnet werden. Da zugleich hohe Sicherheitsvoraussetzungen gewährleistet sein müssen, werden erfindungsgemäß bestimmte Gültigkeitsmerkmale, bspw. die Gültigkeitsdauer bzw. der Gültigkeitszeitraum bevorzugt erst bei der Ausgabe der Vignette auf einer fälschungssicheren Vignetten-Vorlage angebracht.

In einer vorteilhaften Ausführungsform einer Vorrichtung zur Ausgabe erfindungsgemäßer Vignetten werden Mittel zum Stanzen der Gültigkeitsmerkmale in die Vignetten-Vorlage vorgesehen. Auf diese Weise kann die Vignetten-Vorlage vollständig mit Adhäsionsmittel und Abdeckfolie vorbereitet werden, wobei die Gültigkeitsmerkmale erst bei der Ausgabe wie oben angeführt eingestanzt werden.

Vorteilhafterweise wird eine erfindungsgemäße Vorrichtung so ausgebildet, daß unterschiedliche Gültigkeitsmerkmale (z. B. Tage, Wochen, Monate, Regionen, etc.) ansteuerbar anzubringen sind. Je nach Voreinstellung werden somit die jeweils gewünschten Merkmale angebracht, z. B. eingestanzt.

In einer vorteilhaften Ausführungsform der erfindungsgemäßen Vorrichtung wird wenigstens ein Typenrad zum Stanzen alphanumerischer Stanzbilder vorgesehen. Ein derartiges Typenrad ist ein Beispiel für eine Vorrichtung zum ansteuerbaren Einstanzen unterschiedlicher Gültigkeitsmerkmale.

Weiterhin wird vorzugsweise wenigstens ein Stanzstift zum Ausstanzen spezifischer Kennungsfelder vorgesehen. Derartige Kennungsfelder, die symbolisch bspw. Monatstage oder Monatsnummern bezeichnen können, werden hierbei vorbereitet auf die Vignetten-Vorlage ausgedruckt. Nach dem Ausstanzen durch den Stanzstift sind sie für den jeweiligen Zeitraum oder in einer sonstigen Bedeutung gültig und fertig zur Ausgabe.

Vorteilhafterweise werden zusätzliche Mittel zum Aufkleben einer Folie nach dem Anbringen der Gültigkeitsmerkmale auf der Rückseite der Vignette vorgesehen. Auf diese Weise können die ausgestanzten Bereiche der Vignette farblich hervorgehoben werden.

Vorzugsweise werden zusätzlich Mittel zur elektronischen Erfassung von auf der Vignetten-Vorlage befindlichen codierten Vignetten-Daten vorgesehen. Derartige Daten können bspw. in einer Seriennummer vorgesehen werden. Durch derartige Mittel zur Erfassung solcher Vignetten-Daten kann eine Kontrolle darüber stattfinden, welche Vignetten-Vorlagen insgesamt ausgegeben wurden. Die Mittel zur elektronischen Erfassung können bspw. in Form eines Barcodelesers bestehen, der einen entsprechenden Barcode auf der Vignetten-Vorlage liest.

Vorzugsweise werden Mittel zur Zuordnung einer auf der Vignetten-Vorlagen vorgesehen Kennung zu den bei der Ausgabe der Vignette angebrachten Gültigkeitsmerkmalen vorgesehen. Somit ist sowohl die bestimmte Vignetten-Vorlage, bspw. aufgrund einer Seriennummer erfaßt sowie die entsprechenden Gültigkeitsmerkmale, bspw. Monate, Wochen oder Tage an denen die Vignette gültig ist, zugeordnet. Somit ist eine vollständige Kontrolle sowohl hinsichtlich der ausgegebenen Vignetten als auch bezüglich des Gültigkeitsbereichs einer Vignette möglich.

Vorzugsweise werden die Zuordnungsdaten, d. h. die spezifischen Vignettendaten (z. B. Seriennummer) sowie die Gültigkeitsdaten, zentral erfaßt und abrufbar abgelegt. Eine derartige zentrale Erfassung und Abrufung erleichtert die oben angeführte Kontrolle.

Vorteilhafterweise werden diese Daten über ein Terminal und/ oder Mobilteil einer Vorrichtung wie oben ausgeführt abrufbar vorgesehen. Somit kann an jeder Stelle, an der sich ein Ausgabeterminal befindet, die Gültigkeit einer Vignette überprüft werden. Insbesondere bieten die oben angeführten Mobilteile große Vorteile, da ein solches Mobilteil zu einer regelmäßigen Verkehrskontrolle mitgeführt werden kann. Vorzugsweise werden die Mittel zum Anbringen der Gültigkeitsmerkmale in einem Terminal und/ oder Mobilteil wie vorab beschrieben integrierbar vorgesehen. Hierdurch erübrigt sich ein Zusatzgerät.

Vorteilhafterweise werden an der Vorrichtung zur Ausgabe der Vignetten Mittel zur Eingabe ausgewählter, auf einer Vignetten-Vorlage anzubringende Gültigkeitsmerkmale vorgesehen. Hierdurch kann angegeben werden, für welchen Zeitraum oder bei Bedarf auch für welche Art von Fahrzeug, für welchen Streckenbereich usw. die Vignette gültig gemacht werden soll.

In einer besonders vorteilhaften Ausführungsform wird die Tastatur eines Terminals und/ oder eines Mobilteils wie vorbeschrieben zur Eingabe der gewünschten Gültigkeitsmerkmale verwendet. Hierdurch erübrigt sich die Anordnung separater Eingabemittel.

## Patentansprüche

1. Adhäsiv-Vignette zur Erhebung von Straßenbenutzungsgebühren, dadurch gekennzeichnet, daß eine Vignettenvorlage vorgesehen ist, auf der zum Zeitpunkt der Ausgabe an den Käufer bestimmte Gültigkeitsmerkmale anzubringen sind.

2. Adhäsiv-Vignette nach Anspruch 1, dadurch gekennzeichnet, daß spezifische Kennfelder zum Ausstanzen vorgesehen sind.

3. Adhäsiv-Vignette nach einem der vorgenannten Ansprüche, dadurch gekennzeichnet, daß ein bei der Ausgabe mit Gültigkeitsmerkmalen bedruckbarer Bereich vorgesehen ist.

4. Adhäsiv-Vignette nach einem der vorgenannten Ansprüche, dadurch gekennzeichnet, daß eine Folie zum Aufkleben auf die Vignette nach dem Anbringen der Gültigkeitsmerkmale vorgesehen ist.

5. Vorrichtung zur Ausgabe von sog. Adhäsiv-Vignetten, insbesondere in Verbindung mit einer Vorrichtung nach einem der vorgenannten Ansprüche, dadurch gekennzeichnet, daß Mittel zum Anbringen von Gültigkeitsmerkmalen auf einer Vignetten-Vorlage vorhanden sind.

6. Vorrichtung nach einem der vorgenannten Ansprüche, dadurch gekennzeichnet, daß die Mittel zum Anbringen von Gültigkeitsmerkmalen Mittel zum Stanzen umfassen.

7. Vorrichtung nach einem der vorgenannten Ansprüche, dadurch gekennzeichnet, daß verschiedene Gültigkeitsmerkmale wahlweise ansteuerbar anbringbar sind.

8. Vorrichtung nach einem der vorgenannten Ansprüche, dadurch gekennzeichnet, daß wenigstens ein Typenrad zum Stanzen alphanummerischer Stanzbilder vorgesehen ist.

9. Vorrichtung nach einem der vorgenannten Ansprüche, dadurch gekennzeichnet, daß wenigstens ein Stanzstift zum Ausstanzen spezifischer Kennungsfelder vorgesehen ist.

10. Vorrichtung nach einem der vorgenannten Ansprüche, dadurch gekennzeichnet, daß Mittel zum Aufkleben einer Folie nach dem Anbringen der Gültigkeitsmerkmale vorhanden sind.

11. Vorrichtung nach einem der vorgenannten Ansprüche, dadurch gekennzeichnet, daß Mittel zur elektronischen Erfassung von auf einer Vignetten-Vorlage befindlichen codierten Vignettendaten vorgesehen sind.

12. Vorrichtung nach einem der vorgenannten Ansprüche, dadurch gekennzeichnet, daß Mittel zur Zuordnung einer auf der Vignetten-Vorlage vorgesehenen Kennung zu den bei der Ausgabe angebrachten Gültigkeitsmerkmalen vorhanden sind.

13. Vorrichtung nach einem der vorgenannten Ansprüche, dadurch gekennzeichnet, daß die Gültigkeitsmerkmale sowie Kennungsdaten einer Vignetten-Vorlage zentral erfaßbar und abrufbar sind.

14. Vorrichtung nach einem der vorgenannten Ansprüche, dadurch gekennzeichnet, daß Daten der Gültigkeitsmerkmale sowie die zugeordnete Kennung der Vignetten-Vorlage über ein Terminal und/ oder Mobilteil nach einem der vorgenannten Ansprüche abrufbar sind.

15. Vorrichtung nach einem der vorgenannten Ansprüche, dadurch gekennzeichnet, daß die Mittel zum Anbringen von Gültigkeitsmerkmalen in ein Terminal und/ oder ein Mobilteil nach einem der vorgenannten Ansprüche integrierbar sind.

16. Verfahren zur Ausgabe von Adhäsiv-Vignetten, dadurch gekennzeichnet, daß eine Vorrichtung zum Anbringen von Gültigkeitsmerkmalen auf eine Vignetten-Vorlage nach einem der vorgenannten Ansprüche verwendet wird.
